# EUROPÄISCHE PATENTSCHRIFT

(11) **EP 3 656 495 B1**
(45) Veröffentlichungstag und Bekanntmachung des Hinweises auf die Patenterteilung: **17.04.2024**
(21) Anmeldenummer: 18207983.0
(22) Anmeldetag: 23.11.2018
(51) Int. Cl.: B23K 9/095, B23K 9/10, G05B 19/409, G06F 3/0481

(54) **NUTZERSCHNITTSTELLENOPTIMIERUNG EINES SCHWEISSGERÄTS**
OPTIMIZING USER INTERFACES OF A WELDING DEVICE
OPTIMISER L'INTERFACE UTILISATEUR D'UN APPAREIL DE SOUDAGE

(43) Veröffentlichungstag der Anmeldung: 27.05.2020
(73) Patentinhaber: EWM AG, 56271 Mündersbach (DE)
(72) Erfinder: Szczesny, Michael, 56271 Mündersbach (DE)
(74) Vertreter: Cohausz & Florack

(56) Entgegenhaltungen:
- WO-A2-2010/037145
- US-A1- 2006 207 980
- US-A1- 2009 089 701
- US-A1- 2014 143 694

## Beschreibung

Die vorliegende Erfindung betrifft eine Steuereinheit für ein Schweißgerät, insbesondere Lichtbogenschweißgerät, wobei die Steuereinheit dazu eingerichtet ist, Informationen über zur Steuerung eines Schweißgeräts verwendeter Steuerbefehle zu erhalten, ein System mit der Steuereinheit und einem Schweißgerät, insbesondere einem Lichtbogenschweißgerät, sowie ein Verfahren zur Steuerung des Systems.

Aus dem Stand der Technik sind Schweißgeräte mit Steuereinheiten zur Steuerung verschiedener Betriebsmodi (z.B. Kurzlichtbogen- oder Impulslichtbogenbetrieb bei einem MIG-/MAG-Schweißgerät), Schweißparameter (z.B. Schweißstrom, Schweißspannung, Gasdurchfluss, Drahtvorschub etc.) und sonstiger Einstellungen (zusammen hier: "Betriebsparameter") eines Schweißgeräts bekannt. Für die Auswahl der Betriebsparameter verfügen Schweißgeräte über eine Nutzerschnittstelle, die zum Beispiel Knöpfe, Drehregler und/oder einen Touchscreen umfasst und über die sich die Betriebsparameter einstellen lassen.

Da die Anzahl der Eingabeelemente (Taster/Knöpfe, Drehregler, Druckpunkte am Touchscreen etc.) einer Nutzerschnittstelle eines modernen Schweißgeräts typischerweise deutlich geringer ist als die Anzahl der an einem modernen Schweißgerät einstellbaren Betriebsparameter, ist die Vornahme einer Auswahl von Betriebsparametern erforderlich, auf die über jeweilige Eingabeelemente der Nutzerschnittstelle Direktzugriff bestehen soll. Die übrigen Betriebsparameter lassen sich dann typischerweise erst durch die Navigation durch ein auf einem Bildschirm des Schweißgeräts angezeigtes Menü erreichen. Dies kann für den Benutzer des Schweißgeräts sehr mühselig sein, wenn er häufiger auf Betriebsparameter ohne Direktzugriff zugreifen muss, insbesondere da Schweißgeräte aus dem Stand der Technik mitunter Nutzerschnittstellen mit komplizierter und wenig intuitiver Menüführung aufweisen. Dadurch kann das Einrichten eines Schweißgeräts durch einen Benutzer für einen bestimmten Schweißprozess eine gewisse Zeit in Anspruch nehmen und es besteht auch die Gefahr des Verwechselns von Betriebsparametern, was zu schlechten Qualitäten der ausgeführten Schweißarbeiten führen kann.

Eine Möglichkeit zur Lösung dieses Problems besteht darin, die Anzahl der Eingabeelemente an einer Nutzerschnittstelle deutlich zu erhöhen, um einen Direktzugriff auf mehr Betriebsparameter zu ermöglichen. Dies erhöht jedoch auch die Herstellungskosten. Zudem führen die meisten Benutzer von Schweißgeräten häufig sich wiederholende Arten von Schweißhandlungen aus, wozu in der Regel ähnliche Betriebsparameter ausgewählt bzw. eingestellt werden, und nutzen daher nur selten das gesamte Spektrum der angebotenen Betriebsparameter moderner Schweißgeräte aus. Zudem kann eine Nutzerschnittstelle mit vielen Eingabeelementen verwirrend für den Benutzer sein und das schnelle Auffinden der tatsächlich gewünschten, oft verwendeten Betriebsparameter, erschweren.

Eine weitere Möglichkeit zur Lösung dieses Problems besteht darin, die Nutzerschnittstelle konfigurierbar auszugestalten und es dem Benutzer zu ermöglichen, die Betriebsparameter, die bestimmten Eingabeelementen der Nutzerschnittstelle zugeordnet sind, selbst auszuwählen. Dies kann jedoch einen zum Teil aufwändigen und komplizierten Konfigurationsvorgang der Nutzerschnittstelle erfordern, der viel Zeit kosten kann und den nicht notwendigerweise jeder Benutzer in der Lage ist durchzuführen. Eine konfigurierbare Schnittstelle eines Schweißgeräts ist zum Beispiel aus der US 2006/207980 A1 bekannt.

Vor diesem Hintergrund liegt der folgenden Erfindung die Aufgabe zugrunde, eine Steuereinheit für ein Schweißgerät, ein System mit einem Schweißgerät und einer solchen Steuereinheit, insbesondere ein Schweißgerät mit einer darin integrierten Steuereinheit, sowie ein Verfahren zur Steuerung des Systems zur Verfügung zu stellen, durch die eine benutzerfreundlichere und einfachere Bedienung des Schweißgeräts ermöglicht wird.

Diese Aufgabe wird durch eine Steuereinheit gemäß Anspruch 1 gelöst.

Auf diese Weise ist die Steuereinheit in der Lage, die Nutzerschnittstelle eines Schweißgeräts automatisch zu optimieren und insbesondere an die Bedürfnisse des oder der Benutzer des Schweißgeräts anzupassen, ohne dass eine aufwändige manuelle Konfiguration des Schweißgeräts erforderlich ist.

Die Nutzerschnittstellenoptimierung umfasst ein Auswerten von erhaltenen Informationen über zur Steuerung eines Schweißgeräts verwendeter Steuerbefehle. Bei der Nutzerschnittstellenoptimierung werden also erhaltene Informationen über Steuerbefehle ausgewertet, die zur Steuerung eines Schweißgeräts verwendet worden sind. Dies ermöglicht eine Optimierung der Nutzerschnittstelle auf Basis einer Nutzung eines Schweißgeräts in der Vergangenheit, so dass die Nutzerschnittstelle für den konkreten Einsatzzweck eines Schweißgeräts optimiert werden kann.

Die Informationen können Informationen über Steuerbefehle umfassen, die zur Steuerung eines Schweißgeräts über einen vorgegebenen Zeitraum in der Vergangenheit verwendet wurden, beispielsweise über einen Zeitraum seit Durchführung einer letzten Nutzerschnittstellenoptimierung oder seit Inbetriebnahme oder eines Resets eines Schweißgeräts.

Die Informationen können Informationen über Steuerbefehle umfassen, die zur Steuerung eines der Steuereinheit zugeordneten Schweißgeräts verwendet wurden, insbesondere eines Schweißgeräts, zu dessen Steuerung die Steuereinheit eingerichtet ist, vorzugsweise eines Schweißgeräts in das die Steuereinheit integriert ist. Vorzugsweise wird in diesem Fall eine Nutzerschnittstelle des der Steuereinheit zugeordneten Schweißgeräts optimiert.

Zusätzlich oder alternativ können die Informationen auch Informationen über zur Steuerung mehrerer Schweißgeräte oder zur Steuerung mindestens eines weiteren Schweißgeräts verwendeter Steuerbefehle umfassen. Unter mindestens einem weiteren Schweißgerät wird insbesondere ein anderes Schweißgerät verstanden, als das Schweißgerät, dem die Steuereinheit zugeordnet ist. Bei Großbaustellen oder Fertigungsstätten, zum Beispiel einer Werft, werden häufig mehrere Schweißgeräte zu ähnlichen Zwecken eingesetzt. Durch die Berücksichtigung von Informationen von mehreren Schweißgeräten zur Nutzerschnittstellenoptimierung kann auf eine größere Datenbasis zurückgegriffen und die Nutzerschnittstelle für einen bestimmten Einsatzort besser optimiert werden.

Die Informationen umfassen erfindungsgemäß Informationen über Steuerbefehle betreffend die Einstellung von Betriebsparametern, insbesondere einen für einen Schweißvorgang verwendeten Betriebsmodus und/oder für einen Schweißvorgang verwendete Schweißparameter.

Das Auswerten dient bzw. führt zum Erhalt eines Auswertungsergebnisses. Das Auswertungsergebnis stellt demnach ein Ergebnis dar, das durch die Auswertung der erhaltenen Informationen über zur Steuerung eines Schweißgeräts verwendeter Steuerbefehle erzeugt wurde. Bei dem Auswertungsergebnis kann es sich beispielsweise um eine Information über ein oder mehrere Steuerbefehle handeln, für die bei einer optimierten Nutzerschnittstelle Direktzugriff möglich sein soll.

Die Steuereinheit ist dazu eingerichtet, Informationen über zur Steuerung eines Schweißgeräts verwendeter Steuerbefehle zu erhalten. Zu diesem Zweck kann die Steuereinheit zum Beispiel mit einem Speicher verbunden sein, auf dem für die Steuerung eines Schweißgeräts, insbesondere des der Steuereinheit zugeordneten Schweißgeräts, verwendete Steuerbefehle protokolliert werden. Zusätzlich oder alternativ kann die Steuereinheit dazu eingerichtet sein, Informationen über zur Steuerung eines Schweißgeräts verwendeter Steuerbefehle über eine Kommunikationsschnittstelle zu empfangen, beispielsweise über eine Netzwerkschnittstelle, über die die Steuereinheit mit weiteren Schweißgeräten, insbesondere mit Steuereinheiten anderer Schweißgeräte, kommunizieren kann.

Die Nutzerschnittstellenoptimierung umfasst weiterhin ein Zuordnen eines Steuerbefehls zu einer definierten Nutzereingabe über die Nutzerschnittstelle. Auf diese Weise wird einer definierten Nutzereingabe über die Nutzerschnittstelle, beispielsweise einem Tasten- oder Knopfdruck, ein bestimmter Steuerbefehl zugeordnet, der bei Erkennen der definierten Nutzereingabe ausgelöst werden soll. Vorzugsweise handelt es sich bei der definierten Nutzereingabe um eine Einfacheingabe, d.h. um eine Betätigung eines einzelnen Eingabeelements wie zum Beispiel einer Taste, eines Knopfs, eines Drehreglers oder der Betätigung einer bestimmten Stelle auf einem Touchscreen, oder um eine Simultanmehrfacheingabe, d.h. um die gleichzeitige Betätigung mehrerer Eingabeelemente wie zum Beispiel zweier Tasten oder Knöpfe. Auf diese Weise wird der Steuerbefehl im Direktzugriff verfügbar gemacht und eine komplizierte Navigation durch ein Menü wird vermieden.

Bei dem Steuerbefehl handelt es sich erfindungsgemäß um die Auswahl eines Betriebsparameters, beispielsweise eines bestimmten Schweißbetriebs, z.B. Kurzlichtbogenbetriebs oder Pulslichtbogenbetriebs, oder um die Einstellung eines Schweißparameters, z.B. Einstellung eines bestimmten Schweißstroms, oder um eine Kombinationsauswahl von Betriebsparametern, zum Beispiel Auswahl eines Schweißbetriebs mit bestimmten Schweißparametern.

Die Zuordnung erfolgt abhängig vom Auswertungsergebnis. Auf diese Weise wird die Nutzerschnittstelle abhängig vom Ergebnis des Auswertens der erhaltenen Informationen über zur Steuerung eines Schweißgeräts verwendeter Steuerbefehle optimiert. Dies erlaubt eine nutzungsabhängige Optimierung der Nutzerschnittstelle und macht eine aufwändige manuelle Konfiguration der Nutzerschnittstelle entbehrlich.

Die oben genannte Aufgabe wird erfindungsgemäß weiterhin gelöst durch ein System gemäß Anspruch 6 mit einem Schweißgerät und der zuvor beschriebenen und dem Schweißgerät zugeordneten Steuereinheit.

Weiterhin wird die oben genannte Aufgabe erfindungsgemäß gelöst durch ein Verfahren gemäß Anspruch 12.

Die Steuereinheit weist vorzugsweise mindestens einen Mikroprozessor und mindestens einen Speicher mit Befehlen auf, deren Ausführung auf dem mindestens einen Mikroprozessor die Durchführung der Nutzerschnittstellenoptimierung bewirkt. Insbesondere kann der Speicher Befehle aufweisen, deren Ausführung auf dem mindestens einen Mikroprozessor die Durchführung des zuvor beschriebenen Verfahrens zur Steuerung eines Schweißgeräts oder einer Ausführungsform davon bewirkt.

Im Folgenden werden verschiedene Ausführungsformen der Steuereinheit, des Systems und des Verfahrens beschrieben, wobei die einzelnen Ausführungsformen jeweils unabhängig voneinander für die Steuereinheit, für das System und für das Verfahren gelten. Darüber hinaus sind die Ausführungsformen untereinander kombinierbar.

Bei einer Ausführungsform ist die Steuereinheit dazu eingerichtet, Informationen über Nutzereingaben an einer Nutzerschnittstelle zu erhalten und den Nutzereingaben zugeordnete Steuerbefehle zu bestimmen. Ist die Steuereinheit in ein Schweißgerät integriert, so ist die Steuereinheit insbesondere dazu eingerichtet, Informationen über Nutzereingaben an der Nutzerschnittstelle des Schweißgeräts zu erhalten, insbesondere zu empfangen, und der Nutzereingabe zugeordnete Steuerbefehle zu bestimmen. Zur Bestimmung der Steuerbefehle kann die Steuereinheit insbesondere einen Speicher umfassen oder mit einem Speicher verbunden sein, auf dem Zuordnungen von Nutzereingaben zu Steuerbefehlen gespeichert sind. Auf diese Weise kann die Steuereinheit eines Schweißgeräts die von einem Benutzer des Schweißgeräts über die Nutzerschnittstelle eingegebenen Nutzereingaben auswerten.

Bei einer weiteren Ausführungsform ist die Steuereinheit dazu eingerichtet, die Steuerung eines Schweißgeräts entsprechend einem bestimmten Steuerbefehl zu bewirken. Auf diese Weise ermöglicht die Steuereinheit die Steuerung des Schweißgeräts über die Nutzerschnittstelle.

Bei einer weiteren Ausführungsform ist die Steuereinheit dazu eingerichtet ist, als Informationen über Nutzereingaben an einer Nutzerschnittstelle Informationen über die Betätigung von Eingabeelementen einer Nutzerschnittstelle zu empfangen. Weiterhin umfasst das Zuordnen der Nutzerschnittstellenoptimierung vorzugsweise ein Zuordnen eines Steuerbefehls zu einer Betätigung eines Eingabeelements der Nutzerschnittstelle abhängig vom Auswertungsergebnis. Bei den Eingabeelementen der Nutzerschnittstelle kann es sich beispielweise um Taster, Köpfe, Drehregler und/oder Druckpunkte eines Touchscreens handeln. Bei der Betätigung eines Eingabeelements kann es sich entsprechend um das Drücken einer Taste bzw. eines Knopfes, um das Drehen eines Drehreglers auf eine bestimmte Stellung oder um das Berühren eines bestimmten Bereichs eines Touchscreens handeln. Bei einer entsprechenden Ausführungsform des Systems weist die Nutzerschnittstelle Eingabeelemente auf.

Bei einer weiteren Ausführungsform umfasst die Nutzerschnittstellenoptimierung ein Bewirken einer Nutzerausgabe über die Zuordnung des Steuerbefehls zu der definierten Nutzereingabe. Beispielsweise kann eine Nutzerausgabe auf einem Bildschirm des Schweißgeräts bewirkt werden, durch den der Nutzer über die vorgenommene Zuordnung informiert wird. Auf diese Weise wird der Nutzer über die Neuzuordnung von Steuerbefehlen in Kenntnis gesetzt, so dass er sich auf der Nutzerschnittstelle zurechtfindet.

Erfindungsgemäß umfasst die Nutzerschnittstellenoptimierung ein Zuordnen einer Nutzerausgabe zu einem der definierten Nutzereingabe zugeordneten Ausgabeelement der Nutzerschnittstelle. Die Nutzerausgabe ist insbesondere eine Nutzerausgabe über den der Nutzereingabe zugeordneten Steuerbefehl. Insbesondere bewirkt die Steuereinrichtung die Ausgabe der Nutzerausgabe auf dem zugeordneten Ausgabeelement.

Bei dem Ausgabeelement kann es sich um einen Bildschirm oder um einen Bildschirmbereich handeln, der im Bereich eines Eingabeelements wie zum Beispiel einer Taste oder einem Knopf angeordnet ist. Umfasst die Nutzerschnittstelle beispielsweise mehrere neben einem Bildschirm angeordnete Eingabeelemente, so kann eine Information über den einem Eingabeelement zugeordneten Steuerbefehl einem Bildschirmbereich neben dem jeweiligen Eingabeelement zugeordnet werden. Umfasst die Nutzerschnittstelle ein Touchscreen mit mehreren virtuellen Eingabeelementen in verschiedenen Bereichen des Touchscreens, so kann eine Information über den einem Eingabeelement zugeordneten Steuerbefehl dem entsprechenden Bereich des Bildschirms zugeordnet werden. Auf diese Weise kann der Nutzer die Eingabeelemente einer Nutzerschnittstelle nach Durchführung der Nutzerschnittstellenoptimierung ohne Weiteres zuordnen.

Bei einer entsprechenden Ausführungsform des Systems weist die Nutzerschnittstelle einen Touchscreen oder einen Bildschirm mit im Bereich des Bildschirms angeordneten Eingabeelementen, beispielsweise Tasten, Knöpfen und/oder Drehreglern, auf.

Bei einer weiteren Ausführungsform umfasst das Auswerten ein Auswerten einer Häufigkeit von zur Steuerung eines Schweißgeräts verwendeter Steuerbefehle. Beispielsweise kann beim Auswerten ermittelt werden, welcher Steuerbefehl bzw. welche Steuerbefehle in der Vergangenheit am häufigsten verwendet wurden. Auf diese Weise kann die Nutzerschnittstelle dahingehend optimiert werden, dass häufig verwendete Steuerbefehle möglichst im Direktzugriff über die Nutzerschnittstelle zur Verfügung stehen und komplizierte Menünavigationen vermieden werden können. Zu diesem Zweck umfasst das Zuordnen vorzugsweise ein Zuordnen eines gemäß dem Auswertungsergebnis häufig genutzten Steuerbefehls zu einer definierten Nutzereingabe über die Nutzerschnittstelle, insbesondere zu einer Betätigung eines Eingabeelements der Nutzerschnittstelle.

Das Auswerten kann insbesondere ein Auswerten von in Kombination miteinander verwendeter Steuerbefehle, insbesondere von in Kombination miteinander eingestellter Betriebsparameter, umfassen, beispielsweise ein Auswerten von ein oder mehreren verwendeten Schweißparametern bei einem bestimmten Betriebsmodus. Auf diese Weise kann ermittelt werden, welche Steuerbefehle für einen Schweißvorgang in Kombination miteinander eingesetzt werden. Weiter umfasst die Nutzerschnittstellenoptimierung vorzugsweise das Bestimmen einer Steuerbefehlskombination mit mehreren Steuerbefehlen abhängig vom Auswertungsergebnis, insbesondere eine Steuerbefehlskombination von Steuerbefehlen, die gemäß dem Auswertungsergebnis gemeinsam für einen Schweißvorgang verwendet wurden. Weiterhin umfasst das Zuordnen vorzugsweise ein Zuordnen der bestimmten Steuerbefehlskombination zu einer Nutzereingabe über die Nutzerschnittstelle. Auf diese Weise können zum Beispiel häufig verwendete Kombinationen von Steuerbefehlen, beispielsweise ein Betriebsmodus mit bestimmten vorgegebenen Schweißparametern, zu einer Steuerbefehlskombination zusammengefasst und über die zugeordnete Nutzereingabe gleichzeitig abrufbar gemacht werden, so dass die Anzahl der zur Einstellung dieser Steuerbefehlskombination erforderlichen Nutzereingaben reduziert werden kann.

Wird bei der Auswertung beispielsweise festgestellt, dass das Schweißgerät in der Vergangenheit im Kurzlichtbogenbetrieb mit 200 A oder 300 A maximaler Schweißstromstärke oder im Impulsbogenbetrieb mit 400 A maximaler Schweißstromstärke betrieben wurde, so kann die Steuereinheit zum Beispiel eine erste Steuerbefehlskombination "Kurzlichtbogen 200 A", eine zweite Steuerbefehlskombination "Kurzlichtbogen 300A" und eine dritte Steuerbefehlskombination "Impulslichtbogen 400 A" bestimmen und jeweiligen Nutzereingaben zuordnen, vorzugsweise im Direktzugriff, so dass ein Benutzer über die Nutzerschnittstelle durch die entsprechende Nutzereingabe direkt eine dieser drei Steuerbefehlskombinationen ansteuern kann.

Erfindungsgemäß ist die Steuereinheit dazu eingerichtet, die Nutzerschnittstellenoptimierung nach Erhalt einer Information über eine Nutzereingabe über die Durchführung einer Nutzerschnittstellenoptimierung durchzuführen. Auf diese Weise kann die Durchführung der Nutzerschnittstellenoptimierung abhängig von einer bestimmten Nutzereingabe zur Durchführung Nutzerschnittstellenoptimierung erfolgen und die Nutzerschnittstellenoptimierung kann damit nach Bestätigung durch den Benutzer durchgeführt werden. Eine rein automatische Nutzerschnittstellenoptimierung kann ggf. unerwünscht sein, insbesondere wenn der Benutzer eine Veränderung der Nutzerschnittstelle nicht erwartet. Durch das Warten auf eine entsprechende Nutzereingabe vor Durchführung der Nutzerschnittstellenoptimierung, kann der Benutzer selbst bestimmen ob bzw. wann eine Nutzerschnittstellenoptimierung durchgeführt werden soll.

Bei einer weiteren Ausführungsform ist die Steuereinheit dazu eingerichtet, eine Information über eine Nutzeridentität zu erhalten und die Nutzerschnittstellenoptimierung abhängig von der Nutzeridentität durchzuführen. Auf diese Weise kann eine nutzer- oder nutzergruppenspezifische Nutzerschnittstellenoptimierung erfolgen. Die Nutzerschnittstellenoptimierung kann insbesondere dadurch abhängig von der Nutzeridentität durchgeführt werden, dass bei der Nutzerschnittstellenoptimierung ein Auswerten von erhaltenen Informationen über von einem der Nutzeridentität zugeordneten Nutzer oder von einer der Nutzeridentität zugeordneten Nutzergruppe zur Steuerung eines Schweißgeräts verwendeter Steuerbefehle umfasst. Auf diese Weise kann verschiedenen Nutzern bzw. Nutzergruppen eine jeweils an das Nutzerverhalten angepasste optimierte Nutzerschnittstelle zur Verfügung gestellt werden. Zu diesem Zweck werden auf einem Speicher der Steuereinheit oder auf einem mit der Steuereinheit verbundenen Speicher vorzugsweise verwendete Steuerbefehle zusammen mit einer Information über den jeweiligen Nutzer bzw. die Nutzergruppe protokolliert.

Die Steuereinheit kann die Nutzeridentität insbesondere über ein Lesegerät erhalten, mit dem ein Anmeldetoken, beispielsweise eine Karte mit einem Barcode, einem Chip oder einem Magnetstreifen zur Nutzeridentifikation ausgelesen werden kann.

Bei einer entsprechenden Ausführungsform des Systems weist das Schweißgerät eine Identifikationseinheit zur Identifikation eines Nutzers auf. Die Steuereinheit ist vorzugsweise dazu eingerichtet, eine Information über eine Nutzeridentität von der Identifikationseinheit zu erhalten.

Bei einer weiteren Ausführungsform des Systems weist das Schweißgerät eine Kommunikationseinheit zur Kommunikation mit mindestens einem weiteren Schweißgerät auf, die Steuereinheit ist dazu eingerichtet, von der Kommunikationseinheit empfangene Informationen über zur Steuerung mindestens eines weiteren Schweißgeräts verwendeter Steuerbefehle zu erhalten, und die Nutzerschnittstellenoptimierung umfasst ein Auswerten von erhaltenen Informationen über zur Steuerung des Schweißgeräts, dem die Steuereinheit zugeordnet ist, verwendeter Steuerbefehle sowie von erhaltenen Informationen über zur Steuerung des mindestens einen weiteren Schweißgeräts verwendete Steuerbefehle zum Erhalt eines Auswertungsergebnisses. Auf diese Weise können beim Auswerten Informationen über verwendete Steuerbefehle von mehreren Schweißgeräten berücksichtigt werden, wodurch sich die Datenbasis für die Auswertung verbessert. Auf diese Weise kann bei der Nutzerschnittstellenoptimierung der Nutzerschnittstelle eines Schweißgeräts insbesondere das Nutzerverhalten an mehreren Schweißgeräten, beispielsweise aus einer Gruppe von Schweißgeräten, berücksichtigt werden.

Bei einer entsprechenden Ausführungsform des Verfahrens werden Informationen über zur Steuerung eines weiteren Schweißgeräts verwendeter Steuerbefehle erhalten und es erfolgt bei der Durchführung der Nutzerschnittstellenoptimierung ein Auswerten von erhaltenen Informationen über zur Steuerung des Schweißgeräts sowie zur Steuerung des weiteren Schweißgeräts verwendeter Steuerbefehle zum Erhalt des Auswertungsergebnisses.

Bei der Kommunikationseinheit kann es sich beispielsweise um eine Netzwerkschnittstelle handeln, zum Beispiel für ein LAN- oder WLAN-Netzwerk, über das das Schweißgerät mit anderen, zum Beispiel baugleichen Schweißgeräten kommunikationstechnisch verbindbar ist.

Unter der Kommunikation mit mindestens einem weiteren Schweißgerät wird insbesondere die Kommunikation mit einer Kommunikationseinheit des mindestens einen weiteren Schweißgeräts verstanden.

Bei einer weiteren Ausführungsform ist die Kommunikationseinheit zur direkten Kommunikation mit mindestens einem weiteren, beispielsweise baugleichen, Schweißgerät eingerichtet, insbesondere über eine Peer-to-Peer-Verbindung. Auf diese Weise ist eine Zwischeninstanz wie zum Beispiel ein von den Schweißgeräten separater Server, für die Kommunikationsverbindung entbehrlich, so dass die Kommunikation zwischen den Schweißgeräten kein von den Schweißgeräten separates Hardware-Equipment erfordert.

Insbesondere können mehrere, beispielsweise mindestens zwei oder mindestens drei Schweißgeräte ein Peer-to-Peer-System bilden und Informationen untereinander austauschen.

Die Peer-to-Peer-Verbindung ist vorzugsweise drahtlos, beispielsweise über BlueTooth oder ein anderes drahtloses Datenübertragungsprotokoll.

Bei einer weiteren Ausführungsform des Systems ist die Steuereinheit dazu eingerichtet, ein Senden einer Information über das Auswertungsergebnis oder über das Zuordnen eines Steuerbefehls zu einer definierten Nutzereingabe an der Nutzerschnittstelle über die Kommunikationseinheit zu bewirken. Auf diese Weise kann insbesondere ein Abgleich der Nutzerschnittstellen auf mehreren Schweißgeräten erreicht werden, mit denen die Steuereinheit über die Kommunikationseinheit kommunikationstechnisch verbindbar ist. Auf diese Weise kann erreicht werden, dass mehrere Schweißgeräte, beispielsweise zu einer Gruppe gruppierte Schweißgeräte, auch nach Durchführung einer Nutzerschnittstellenoptimierung an einem der Schweißgeräte eine gleichartige Nutzerschnittstelle aufweisen, so dass die Bedienbarkeit der Schweißgeräte erleichtert wird.

Bei einer weiteren Ausführungsform des Systems weist das Schweißgerät eine Kommunikationseinheit zur Kommunikation mit mindestens einem weiteren Schweißgerät auf, die Steuereinheit ist dazu eingerichtet, eine über die Kommunikationseinheit empfangene Information über ein Auswertungsergebnis einer Nutzerschnittstellenoptimierung oder über ein Zuordnen eines Steuerbefehls zu einer definierten Nutzereingabe zu erhalten, und die Steuereinheit ist dazu eingerichtet, einen Steuerbefehl zu einer definierten Nutzereingabe über die Nutzerschnittstelle abhängig von der erhaltenen Information über das Auswertungsergebnis oder über das Zuordnen eines Steuerbefehls zu einer definierten Nutzereingabe zuzuordnen. Auf diese Weise kann eine von der Steuereinheit eines anderen Schweißgeräts durchgeführte Nutzerschnittstellenoptimierung eingesetzt werden, um die Nutzerschnittstelle des Schweißgeräts zu optimieren.

Werden an einer Großbaustelle oder an einer Fertigungsstätte zum Beispiel mehrere Schweißgeräte für ähnliche Zwecke eingesetzt, so kann auf einer Steuereinheit eines der Schweißgeräte eine Nutzerschnittstellenoptimierung, vorzugsweise unter Berücksichtigung auf mehreren der Schweißgeräte verwendeter Steuerbefehle, durchgeführt werden. Diese Nutzerschnittstellenoptimierung kann dann für mehrere der Schweißgeräte verwendet werden, so dass die Schweißgeräte sich gleichartig bedienen lassen.

Bei einer zugehörigen Ausführungsform des Systems weist das System ein weiteres Schweißgerät auf, wobei die Kommunikationseinheit zur Kommunikation mit dem weiteren Schweißgerät eingerichtet ist.

Weitere Merkmale und Vorteile der Steuereinheit, des Systems und des Verfahrens ergeben sich aus der nachfolgenden Beschreibung von Ausführungsbeispielen, wobei auf die beigefügte Zeichnung Bezug genommen wird.
- Fig. 1a-b: zeigt ein Ausführungsbeispiel des Systems und der Steuereinheit,
- Fig. 2a-b: zeigen Beispiele für die Protokollierung von Informationen über zur Steuerung eines oder mehrerer Schweißgeräte verwendeter Steuerbefehle,
- Fig. 3a-c: illustrieren ein Ausführungsbeispiel für die Durchführung einer Nutzerschnittstellenoptimierung,
- Fig. 4: zeigt mehrere über ein Netzwerk verbundene Schweißgeräte zum Austausch von Informationen für die Durchführung einer Nutzerschnittstellenoptimierung,
- Fig. 5: zeigt mehrere über Peer-to-Peer-Verbindungen verbundene Schweißgeräte zum Austausch von Informationen für die Durchführung einer Nutzerschnittstellenoptimierung und
- Fig. 6: zeigt ein Flussdiagramm eines Verfahrens zur Steuerung eines Schweißgeräts aus Fig. 4 oder 5.

In der nachfolgenden Beschreibung von Ausführungsbeispielen werden Bauteile und Elemente mit gleicher oder ähnlicher Funktion bzw. Wirkungsweise mit denselben Bezugszeichen versehen, auch wenn diese bei unterschiedlichen Ausführungsformen, zum Beispiel hinsichtlich ihrer Dimension, Form oder Funktionalität, Unterschiede aufweisen können.

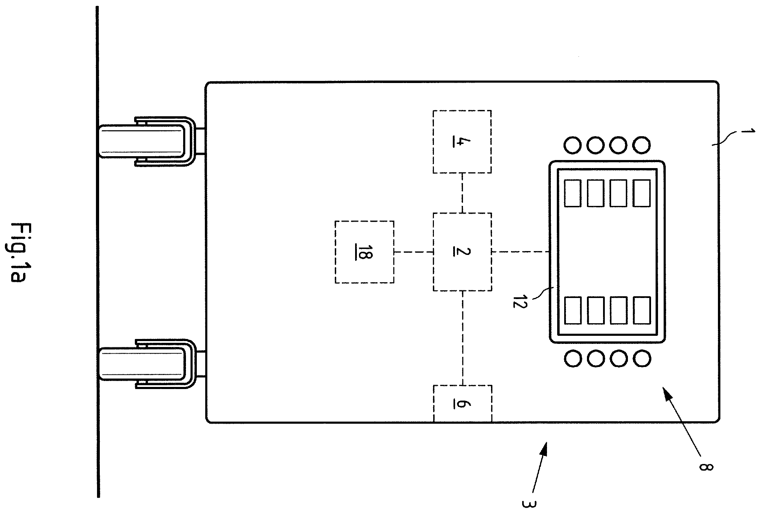

Figur 1a zeigt eine Frontansicht eines beispielhaften Schweißgeräts 1 mit einer in das Schweißgerät 1 integrierten Steuereinheit 2. Das Schweißgerät 1 mit der darin intergierten Steuereinheit 2 bilden zusammen ein System 3.

Das Schweißgerät verfügt über eine integrierte Kommunikationseinheit 6, beispielsweise eine LAN-Schnittstelle oder eine BlueTooth-Schnittstelle, sowie über eine Identifikationseinheit 4, beispielsweise ein Chiplesegerät für Nutzeridentifikations-Chips. Darüber hinaus umfasst das Schweißgerät weitere, der Übersicht halber nicht dargestellte Komponenten, die für die Funktion des Schweißgeräts erforderlich sind, insbesondere Leistungselektronik zur Bereitstellung eines Schweißstroms, einen Netzanschluss zur Stromversorgung, Anschlüsse zum Anschluss eines Schweißbrenners oder eines Drahtvorschubkoffers etc.

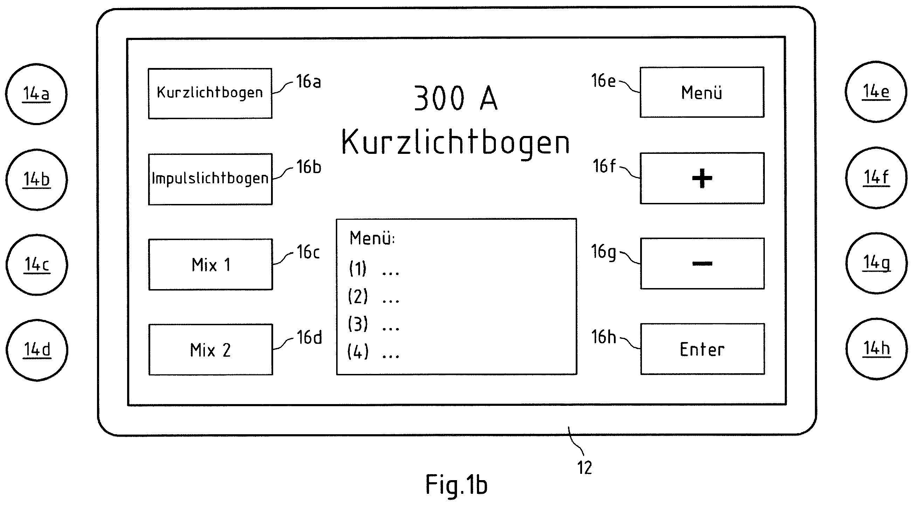

Zur Bedienung des Schweißgeräts 1 ist eine Nutzerschnittstelle 8 vorgesehen, die bei dem Schweißgerät 1 einen Bildschirm 12 sowie um den Bildschirm 12 angeordnete Eingabeelemente in Form von Knöpfen 14a-h umfasst (s. Fig. 1b). Figur 1b zeigt eine schematische Detaildarstellung der Nutzerschnittstelle 8 im Betrieb des Schweißgeräts 1.

Den einzelnen Knöpfen 14a-h sind jeweilige Bereiche 16a-h des Bildschirms 12 zugeordnet, über die im Betrieb eine Information über den einem jeweiligen Knopf 14a-h zugeordneten Steuerbefehl angezeigt wird, so dass der Bediener die jeweilige Belegung der Knöpfe 14a-h mit Steuerbefehlen einfach ablesen kann. Bei den Bereichen 16a-h handelt es sich entsprechend um den einzelnen Eingabeelementen 14a-h zugeordnete Ausgabeelemente 16a-h.

In der Darstellung in Fig. 1b ermöglichen die Knöpfe 14a-d zum Beispiel einen Direktzugriff auf bestimmte Steuerbefehle zur Steuerung des Schweißgeräts 1, mit denen das Schweißgerät durch Betätigung des entsprechenden Knopfs gesteuert werden kann. Zum Beispiel kann durch Betätigung des Knopfes 14a der Kurzlichtbogenbetrieb eingestellt werden. Dies wird dem Benutzer durch die entsprechende Information "Kurzlichtbogen" auf dem zugeordneten Ausgabeelement 16a angezeigt.

Die Knöpfe 14e-h dienen zum Aufrufen eines Menüs und zur Navigation durch das Menü, um auf weitere Steuerbefehle zuzugreifen, für deren Direktzugriff die Nutzerschnittstelle 8 nicht über ausreichend viele Eingabeelemente verfügt.

Der übrige Bereich des Bildschirms 12 kann beispielsweise wie in Fig. 1b illustriert zur Darstellung eines aktuell gewählten Betriebsmodus (in Fig. 1b exemplarisch: "Kurzlichtbogen") oder Schweißparameters (in Fig. 1b exemplarisch: "300 A" max. Schweißstrom) oder zur Darstellung des Menüs dienen.

Das Schweißgerät 1 ermöglicht zunächst die Anmeldung eines Benutzers. Ein Benutzer kann sich zu diesem Zweck mittels eines Tokens, beispielsweise mittels eines Funkchips an der Identifikationseinheit 4 identifizieren, so dass die damit verbundene Steuereinheit 2 Informationen über die Nutzeridentität des Benutzers erhält. Alternativ kann eine Nutzeridentifikation auch durch eine Eingabe über die Nutzerschnittstelle 8 erfolgen (Login).

Der an dem Schweißgerät 1 angemeldete Benutzer kann dann durch entsprechende Nutzereingaben an der Nutzerschnittstelle 8, nämlich insbesondere durch Betätigen der Knöpfe 14a-d, das Schweißgerät 1 steuern, insbesondere bestimmte Betriebsmodi auswählen, Schweißparameter einstellen etc. Durch die Betätigung der Knöpfe 14e-h kann der Benutzer durch ein Menü navigieren, um weitere Einstellungen am Schweißgerät 1 vorzunehmen.

Die Steuereinheit 2 empfängt die vorgenommenen Nutzereingaben, bestimmt die diesen Nutzereingaben zugeordneten Steuerbefehle und bewirkt die Steuerung des Schweißgeräts 1 entsprechend dieser Steuerbefehle. Weiterhin protokolliert die Steuereinheit 2 auf einem mit der Steuereinheit 2 verbundenen Speicher 18 zur Steuerung des Schweißgeräts 1 verwendete Steuerbefehle, ggf. zusammen mit einer Nutzeridentifikation des angemeldeten Benutzers. Die Protokollierung der Steuerbefehle kann beispielsweise dadurch erfolgen, dass eine Information über den verwendeten Steuerbefehl gespeichert wird. Eine besonders einfache Protokollierung ist beispielsweise dadurch möglich, dass im Speicher 18 verschiedene Zählervariablen für verschiedene Steuerbefehle gespeichert werden und bei Verwendung eines Steuerbefehls der diesem Steuerbefehl zugeordnete Zähler um "1" erhöht wird.

Es ist nicht erforderlich, dass sämtliche Steuerbefehle protokolliert werden. Beispielsweise kann die Steuereinheit 2 dazu eingerichtet sein, nur bestimmte Steuerbefehle zu protokollieren, beispielsweise betreffend die Einstellung von Betriebsparametern wie Betriebsmodi, Schweißparameter oder andere Einstellungen für einen Schweißvorgang. Die Protokollierung eines Steuerbefehls kann davon abhängig gemacht werden, ob nach der Einstellung des Steuerbefehls ein Schweißvorgang durchgeführt wird. Auf diese Weise werden für die Protokollierung nur solche Steuerbefehle berücksichtigt, insbesondere ausgewählte Betriebsmodi und/oder Schweißparameter, wenn mit diesen tatsächlich ein Schweißvorgang durchgeführt wird.

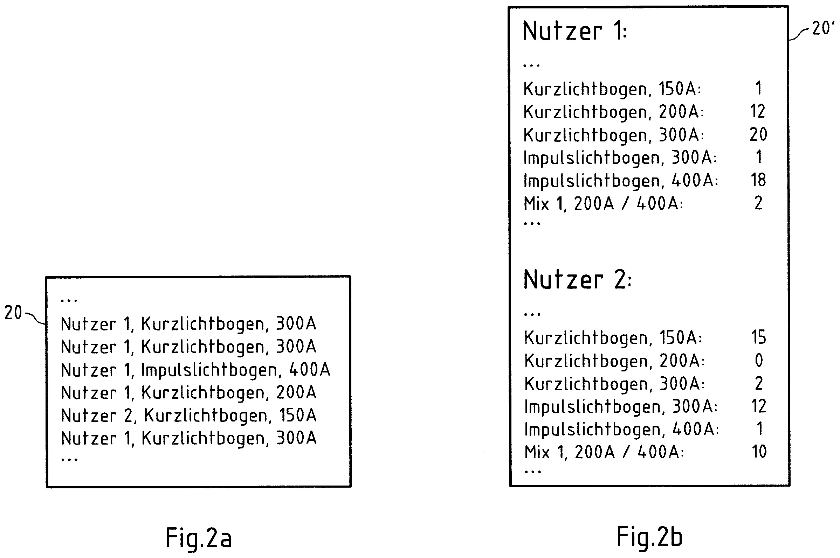

Die Fig. 2a-b zeigen Beispiele für mögliche Protokolldaten 20, 20' verwendeter Steuerbefehle. In Fig. 2a werden für einen Schweißvorgang verwendete Steuerbefehle zur Einstellung des Betriebsmodus ("Kurzlichtbogen", "Impulslichtbogen", "Mix 1") mit zugehörigen Steuerbefehlen zur Einstellung des Schweißstroms ("150A", "200A", "300A", "400A") und optional mit der Nutzeridentifikation ("Nutzer 1", "Nutzer 2") des jeweiligen Nutzers gespeichert. In Fig. 2b werden für verschiedene Betriebsmodi und zugehörige Schweißströme, optional separat für verschiedene Nutzer, jeweilige Zählervariablen gespeichert, wobei die entsprechende Zählervariable bei Durchführung eines entsprechenden Schweißvorgangs um "1" erhöht wird.

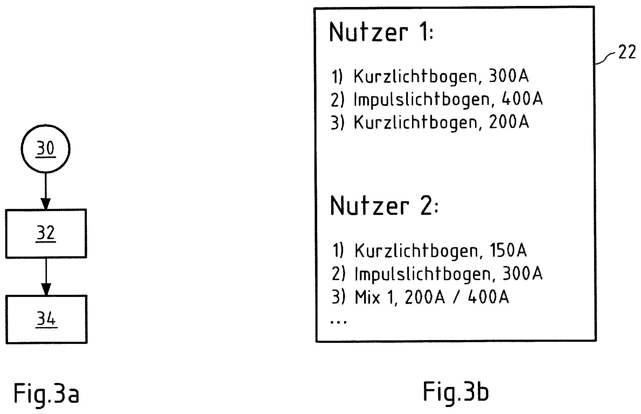

Die Steuereinheit ist weiterhin dazu eingerichtet, eine Nutzerschnittstellenoptimierung zur Optimierung der Nutzerschnittstelle 8 durchzuführen, wenn ein Benutzer über die Nutzerschnittstelle 8 einen Steuerbefehl zur Durchführung einer solchen Nutzerschnittstellenoptimierung gibt. Der Ablauf eines Ausführungsbeispiels einer solchen Nutzerschnittstellenoptimierung wird im Folgenden anhand der Fig. 3a-c erläutert.

Fig. 3a zeigt ein Flussdiagramm eines Ausführungsbeispiels einer Nutzerschnittstellenoptimierung. Die Nutzerschnittstellenoptimierung beginnt im Schritt 30 bei Erhalt einer Information über die Betätigung einer der Nutzerschnittstellenoptimierung zugeordneten Nutzereingabe, beispielsweise der Auswahl des Menüpunkts "Nutzerschnittstellenoptimierung durchführen!" bei Navigation durch ein auf dem Bildschirm 12 dargestelltes Menü mit den Knöpfen 14e-h.

Im Schritt 32 werden aus dem Speicher 18 die Protokolldaten, z.B. Protokolldaten 20 oder 20' aus Fig. 2a-b, geladen und ausgewertet. Insbesondere kann die Häufigkeit von zur Steuerung des Schweißgeräts 1 verwendeter Steuerbefehle ausgewertet werden, vorzugsweise abhängig von der Nutzeridentifikation.

Aus den Protokolldaten 20' ergibt sich zum Beispiel das in Fig. 3b dargestellte Auswertungsergebnis 22, dass Nutzer 1 am häufigsten die Einstellungen "Kurzlichtbogen, 300A", "Impulslichtbogen 400A" und "Kurzlichtbogen 200A" verwendet und Nutzer 2 am häufigsten die Einstellungen "Kurzlichtbogen 150A", "Impulslichtbogen 300A" und "Mix 1, 200A/400A" verwendet.

Die Auswertung kann beispielsweise auch nur für den jeweils angemeldeten Benutzer erfolgen.

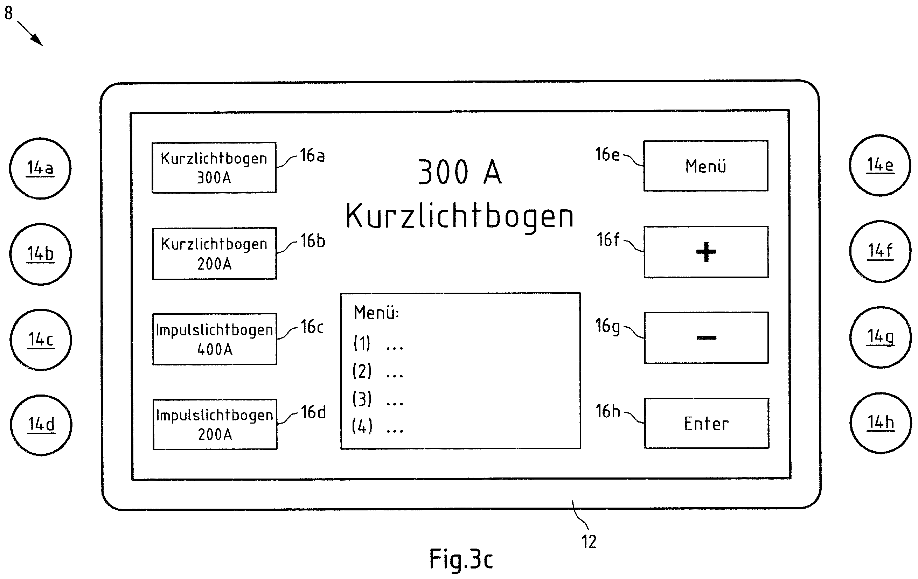

Im Schritt 34 werden Steuerbefehle oder Steuerbefehlskombinationen zu einer definierten Nutzereingabe über die Nutzerschnittstelle 8 abhängig vom Auswertungsergebnis 22 zugeordnet. Im vorliegenden Beispiel werden jeweils Steuerbefehlskombinationen den Knöpfen 14a-d zugeordnet. Weiterhin werden den den Eingabeelementen 14a-d zugeordneten Ausgabeelementen 16a-d entsprechende Nutzerausgaben zugeordnet, so dass diese auf den entsprechenden Ausgabeelementen 16a-d angezeigt werden. Fig. 3c zeigt die optimierte Nutzerschnittstelle 8 für den "Nutzer 1". Der Nutzereingabe "Betätigung des Knopfes 14a" ist zum Beispiel eine Steuerbefehlskombination zugeordnet, die eine Einstellung des Schweißgeräts auf den Betriebsmodus "Kurzlichtbogen" und eine Einstellung des maximalen Schweißstroms auf "300A" bewirkt. Auf diese Weise kann diese vom Nutzer 1 in der Vergangenheit häufig verwendete Betriebsparameterkombination nach Durchführung der Nutzerschnittstellenoptimierung im Direktzugriff durch Betätigung des Knopfes 14a abgerufen werden. Auf diese Weise wird die Bedienung des Schweißgeräts nutzungsabhängig und vorliegend sogar nutzerabhängig deutlich vereinfacht.

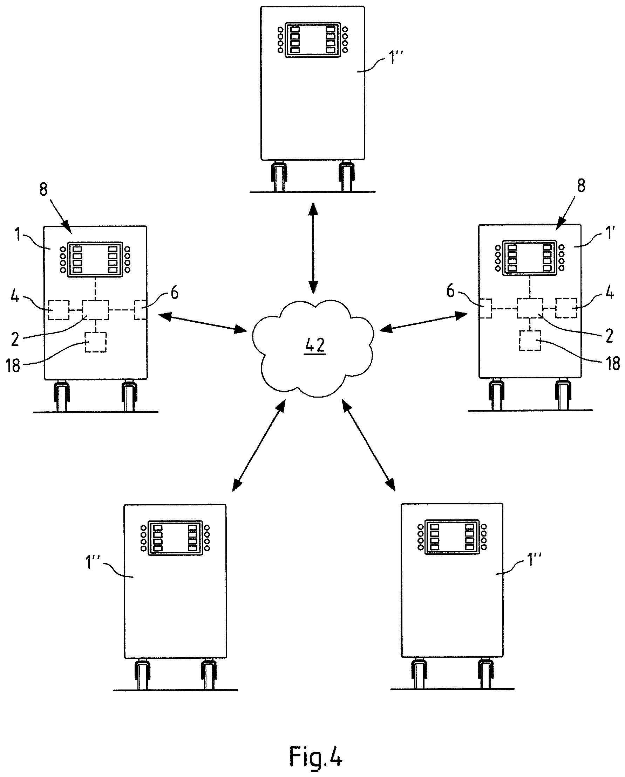

Fig. 4 zeigt weitere Ausführungsbeispiele der Steuereinheiten und des Systems. In Fig. 4 sind das Schweißgerät 1 aus Fig. 1 und ein im Wesentlichen baugleiches Schweißgerät 1' sowie weitere, ggf. ebenfalls baugleiche Schweißgeräte 1" dargestellt. Die Schweißgeräte 1, 1', 1" sind mittels ihrer jeweiligen Kommunikationseinheiten 6 über ein Netzwerk 42, beispielsweise ein LAN-Netzwerk, kommunikationstechnisch miteinander verbunden.

Die Steuereinheit 2 des Schweißgeräts 1' ist dazu eingerichtet, Informationen über zur Steuerung des Schweißgeräts 1' verwendete Steuerbefehle mittels der Kommunikationseinheit 6 an das Netzwerk 42 zu senden. Die Steuereinheit 2 des Schweißgeräts 1 ist entsprechend dazu eingerichtet, über die Kommunikationseinheit 6 empfangene Informationen über zur Steuerung eines anderen Schweißgeräts, nämlich insbesondere des Schweißgeräts 1', verwendete Steuerbefehle zu erhalten.

Darüber hinaus ist die Steuereinheit 2 dazu eingerichtet, bei Durchführung der Nutzerschnittstellenoptimierung die erhaltenen Informationen über zur Steuerung des Schweißgeräts 1 verwendeter Steuerbefehle und die erhaltenen Informationen über zur Steuerung eines anderen Schweißgeräts, nämlich insbesondere des Schweißgeräts 1', verwendeter Steuerbefehle auszuwerten. Beispielsweise kann die Steuereinheit 2 dazu eingerichtet sein, die Häufigkeit der Steuerbefehle auszuwerten, die zur Steuerung der Schweißgeräte 1 und 1' verwendet wurden. Auf diese Weise kann die Datenbasis für die Auswertung gegenüber der Auswertung der Steuerbefehle nur eines Schweißgeräts verbessert werden. Das aus dieser Auswertung resultierende Auswertungsergebnis wird dann von der Steuereinheit 2 zur Zuordnung von Steuerbefehlen zu definierten Nutzereingaben, insbesondere Betätigungen von Eingabeelementen der Nutzerschnittstelle 8 des Schweißgeräts 1 verwendet.

Darüber hinaus ist die Steuereinheit 2 des Schweißgeräts 1 dazu eingerichtet, eine Information über das Auswertungsergebnis bzw. über das Zuordnen von Steuerbefehlen zu jeweiligen Betätigungen von Eingabeelementen mittels der Kommunikationseinheit 6 an das Netzwerk 42 zu senden. Die Steuereinheit 2 des Schweißgeräts 1' ist entsprechend dazu eingerichtet, eine solche Information zu empfangen und eine entsprechende Zuordnung von Steuerbefehlen zu jeweiligen Betätigungen von Eingabeelementen vorzunehmen, so dass die Nutzerschnittstellen 8 beider Schweißgeräte 1, 1' in gleicher Weise optimiert werden.

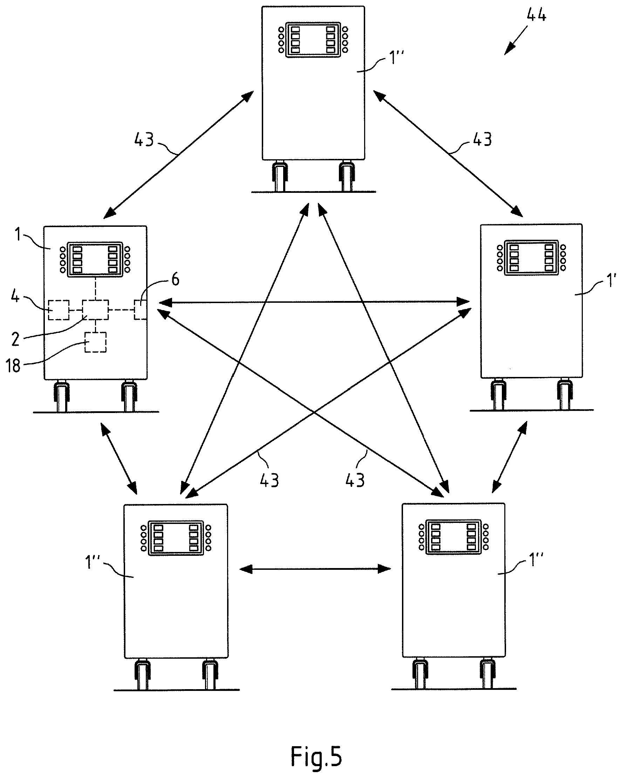

In Fig. 4 kommunizieren die Kommunikationseinheiten 6 der einzelnen Schweißgeräte über ein gemeinsames Netzwerk 42. Fig. 5 zeigt alternative Ausgestaltungen der Schweißgeräte 1, 1', 1" und damit auch des Systems und des Verfahrens, bei denen die jeweiligen Kommunikationseinheiten 6 dazu eingerichtet sind, über jeweilige Peer-to-Peer Verbindungen 43, beispielsweise mittels BlueTooth, direkt mit einer Kommunikationseinheit eines anderen Schweißgeräts zu kommunizieren. Die Schweißgeräte 1, 1', 1" bilden auf diese Weise ein Peer-to-Peer-System 44. xxx

Vorzugsweise ist die Kommunikationseinheit 6 eines jeweiligen Schweißgeräts 1, 1' bzw. 1" für eine direkte Kommunikation ohne separate Hardware, wie zum Beispiel einen von dem Schweißgeräten separaten Server, eingerichtet. Auf diese Weise erfordert die Kommunikation zwischen zwei oder mehreren Schweißgeräten lediglich die Schweißgeräte selbst mit ihren jeweiligen Kommunikationseinheiten und ermöglicht einen Informationsaustausch ohne zusätzliches Hardware-Equipment.

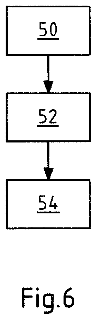

Fig. 6 zeigt ein Flussdiagramm eines Verfahrens zur Steuerung des Schweißgeräts 1 oder 1' aus Fig. 4 oder Fig. 5.

Im ersten Schritt 50 werden von der Steuereinheit 2 des Schweißgeräts 1 (bzw. 1') Informationen über zur Steuerung des Schweißgeräts 1 (bzw. 1') verwendeter Steuerbefehle erhalten und im Speicher 18 protokolliert. Weiterhin werden über die Kommunikationseinheit 6 Informationen über zur Steuerung des jeweiligen weiteren Schweißgeräts 1' (bzw. 1) verwendeter Steuerbefehle erhalten und im Speicher 18 protokolliert. Die Protokollierung der Informationen kann beispielsweise wie im Zusammenhang mit Fig. 2a oder 2b erläutert erfolgen, wobei beim vorliegenden Ausführungsbeispiel die Informationen über zur Steuerung mehrerer Schweißgeräte, nämlich der Schweißgeräte 1 und 1', verwendeter Steuerbefehle protokolliert werden. Die Protokollierung kann für die Steuerbefehle der Schweißgeräte 1 und 1' separat erfolgen. Es ist aber ebenso denkbar, dass die Informationen über die Steuerbefehle unabhängig von deren Herkunft (z.B. Schweißgerät 1 oder 1') protokolliert werden.

Der erste Schritt 50 kann gleichzeitig auf mehreren Schweißgeräten erfolgen, also zum Beispiel sowohl auf dem Schweißgerät 1 als auch auf dem Schweißgerät 1'.

Der erste Schritt 50 wird solange durchgeführt, bis die Steuereinheit 2 eines der Schweißgeräte, in diesem Beispiel des Schweißgeräts 1, eine Information über eine Nutzereingabe zur Durchführung einer Nutzerschnittstellenoptimierung erhält. In diesem Fall führt die Steuereinheit 2 des Schweißgeräts 1 im Schritt 52 eine Nutzerschnittstellenoptimierung durch. Bei der Nutzerschnittstellenoptimierung 52 wertet die Steuereinheit 2 die im Schritt 50 erhaltenen Informationen über zur Steuerung der Schweißgeräte 1 und 1' verwendeten Steuerbefehle aus, insbesondere hinsichtlich deren Häufigkeit, und erzeugt ein Auswertungsergebnis, das beispielsweise Steuerbefehlskombinationen umfasst, die für Schweißvorgänge an den Schweißgeräten 1 und 1' am häufigsten verwendet wurden. Ein Beispiel für derartige Steuerbefehlskombinationen zeigt Fig. 3b, wobei die Auswertung in diesem Fall für verschiedene Nutzer separat erfolgt ist. Stattdessen kann die Auswertung auch unabhängig von den Nutzern erfolgen. Auf Basis dieses Auswertungsergebnisses führt die Steuereinheit 2 des Schweißgeräts 1 nun ein Zuweisen der Steuerbefehlskombinationen aus Fig. 3b zu definierten Nutzereingaben über die Nutzerschnittstelle 8 des Schweißgeräts 1 durch und ordnet den Ausgabeelementen 16a-d entsprechende Nutzerausgaben zu, so dass diese auf den Ausgabeelementen 16a-d angezeigt werden und sich eine optimierte Nutzerschnittstelle 8 wie in Fig. 3c dargestellt ergibt.

Weiterhin sendet die Steuereinheit 2 im Schritt 54 vorzugsweise eine Information über das Auswertungsergebnis oder über die vorgenommene Zuordnung an das Netzwerk 42 bzw. mittels der Peer-to-Peer-Verbindung 43 direkt an ein anderes Schweißgerät (in diesem Beispiel: Schweißgerät 1`). Die Steuereinheit 2 des anderen Schweißgeräts 1' kann diese Information verarbeiten und eine entsprechende Zuordnung für die Nutzerschnittstelle 8 des Schweißgeräts 1' sowie der Zuordnung entsprechender Nutzerausgaben zu den Ausgabeelementen 16a-d der Nutzerschnittstelle 8 des Schweißgeräts 1' veranlassen, so dass das Schweißgerät 1' eine entsprechende optimierte Nutzerschnittstelle 8 wie in Fig. 3c dargestellt erhält.

Auf diese Weise kann die Nutzerschnittstelle mehrerer Schweißgeräte 1, 1' in gleicher Weise nutzungsabhängig optimiert werden, wodurch die Bedienung der Schweißgeräte 1, 1' vereinfacht wird.

Die Durchführung der Nutzerschnittstellenoptimierung kann auch auf jedem Schweißgerät unabhängig durchgeführt werden, insbesondere bei einer entsprechenden Nutzereingabe am jeweiligen Schweißgerät. In diesem Fall ist der Schritt 54 entbehrlich.

Durch den Informationsaustausch im Schritt 50 wird vorzugsweise erreicht, dass auf mehreren, vorzugsweise allen Schweißgeräten einer Gruppe von Schweißgeräten, beispielsweise einer über ein Netzwerk 42 verbundenen Gruppe von Schweißgeräten (Fig. 4) oder einer Gruppe von Schweißgeräten eines Peer-to-Peer-Systems 44 (Fig. 5), dieselben Informationen über zur Steuerung von Schweißgeräten verwendeter Steuerbefehle zur Verfügung stehen, so dass die jeweilige Nutzerschnittstellenoptimierung auf den entsprechenden Schweißgeräten zu einem gleichen Ergebnis führt, auch wenn die Nutzerschnittstellenoptimierung auf jedem Schweißgerät individuell durchgeführt wird.

## Patentansprüche

1. Steuereinheit (2) für ein Schweißgerät (1, 1', 1"),
- wobei die Steuereinheit (2) dazu eingerichtet ist, Informationen über zur Steuerung eines Schweißgeräts verwendeter Steuerbefehle zu erhalten, **dadurch gekennzeichnet,**
- **dass** die Steuereinheit (2) dazu eingerichtet ist, nach Erhalt einer Information über eine Nutzereingabe über die Durchführung einer Nutzerschnittstellenoptimierung eine Nutzerschnittstellenoptimierung (52) zur Optimierung einer Nutzerschnittstelle (8) eines Schweißgeräts (1, 1', 1") durchzuführen, umfassend:
- ein Auswerten von erhaltenen Informationen über zur Steuerung eines Schweißgeräts (1, 1', 1") verwendeter Steuerbefehle zum Erhalt eines Auswertungsergebnisses (22), wobei die Informationen Informationen über Steuerbefehle betreffend die Einstellung von Betriebsparametern umfassen, und
- ein Zuordnen eines Steuerbefehls zu einer definierten Nutzereingabe über die Nutzerschnittstelle (8) abhängig vom Auswertungsergebnis (22), wobei es sich bei dem Steuerbefehl um eine Auswahl eines Betriebsparameters, um die Einstellung eines Schweißparameters oder um eine Kombinationsauswahl von Betriebsparametern handelt, und
- ein Zuordnen einer Nutzerausgabe zu einem der definierten Nutzereingabe zugeordneten Ausgabeelement (16a-h) der Nutzerschnittstelle (8).

2. Steuereinheit nach Anspruch 1,
**dadurch gekennzeichnet,**
**dass** die Steuereinheit (2) dazu eingerichtet ist, Informationen über Nutzereingaben an einer Nutzerschnittstelle (8) zu erhalten und den Nutzereingaben zugeordnete Steuerbefehle zu bestimmen.

3. Steuereinheit nach Anspruch 2,
**dadurch gekennzeichnet,**
- **dass** die Steuereinheit (2) dazu eingerichtet ist, als Informationen über Nutzereingaben an einer Nutzerschnittstelle (8) Informationen über die Betätigung von Eingabeelementen (14a-h) einer Nutzerschnittstelle (8) zu erhalten, und
- **dass** das Zuordnen der Nutzerschnittstellenoptimierung (52) ein Zuordnen eines Steuerbefehls zu einer Betätigung eines Eingabeelements (14a-h) der Nutzerschnittstelle (8) abhängig vom Auswertungsergebnis (22) umfasst.

4. Steuereinheit nach einem der Ansprüche 1 bis 3,
**dadurch gekennzeichnet,**
**dass** das Auswerten ein Auswerten einer Häufigkeit von zur Steuerung eines Schweißgeräts (1, 1', 1") verwendeter Steuerbefehle umfasst.

5. Steuereinheit nach einem der Ansprüche 1 bis 4,
**dadurch gekennzeichnet,**
**dass** die Steuereinheit (2) dazu eingerichtet ist, eine Information über eine Nutzeridentität zu erhalten und die Nutzerschnittstellenoptimierung (52) abhängig von der Nutzeridentität durchzuführen.

6. System (3)
- mit einem Schweißgerät (1, 1', 1") und
- mit einer dem Schweißgerät (1, 1', 1") zugeordneten Steuereinheit (2) nach einem der Ansprüche 1 bis 5, vorzugsweise integriert in das Schweißgerät (1, 1', 1"),
- wobei das Schweißgerät (1, 1', 1") eine Nutzerschnittstelle (8) aufweist und wobei die Steuereinheit (2) dazu eingerichtet ist, eine Nutzerschnittstellenoptimierung (52) zur Optimierung der Nutzerschnittstelle (8) des Schweißgeräts (1, 1', 1") durchzuführen.

7. System nach Anspruch 6,
**dadurch gekennzeichnet,**
**dass** das Schweißgerät (1, 1', 1") eine Identifikationseinheit (4) zur Identifikation eines Nutzers aufweist.

8. System nach Anspruch 6 oder 7,
**dadurch gekennzeichnet,**
- **dass** das Schweißgerät (1, 1', 1") eine Kommunikationseinheit (6) zur Kommunikation mit mindestens einem weiteren Schweißgerät (1, 1', 1") aufweist,
- **dass** die Steuereinheit (2) dazu eingerichtet ist, von der Kommunikationseinheit (6) empfangene Informationen über zur Steuerung mindestens eines weiteren Schweißgeräts (1, 1', 1") verwendeter Steuerbefehle zu erhalten, und
- **dass** die Nutzerschnittstellenoptimierung (52) ein Auswerten von erhaltenen Informationen über zur Steuerung des Schweißgeräts (1, 1', 1"), dem die Steuereinheit (2) zugeordnet ist, verwendeter Steuerbefehle sowie von erhaltenen Informationen über zur Steuerung mindestens eines weiteren Schweißgeräts (1, 1', 1") verwendeter Steuerbefehle zum Erhalt eines Auswertungsergebnisses (22) umfasst.

9. System nach Anspruch 8,
**dadurch gekennzeichnet,**
**dass** die Steuereinheit (2) dazu eingerichtet ist, ein Senden einer Information über das Auswertungsergebnis (22) oder über das Zuordnen eines Steuerbefehls zu einer definierten Nutzereingabe an der Nutzerschnittstelle (8) über die Kommunikationseinheit (6) zu bewirken.

10. System nach einem der Ansprüche 6 bis 9,
**dadurch gekennzeichnet,**
- **dass** das Schweißgerät (1, 1', 1") eine Kommunikationseinheit (6) zur Kommunikation mit mindestens einem weiteren Schweißgerät (1, 1', 1") aufweist,
- **dass** die Steuereinheit (2) dazu eingerichtet ist, eine über die Kommunikationseinheit (6) empfangene Information über ein Auswertungsergebnis (22) einer Nutzerschnittstellenoptimierung (52) oder über ein Zuordnen eines Steuerbefehls zu einer definierten Nutzereingabe zu erhalten, und
- **dass** die Steuereinheit (2) dazu eingerichtet ist, einen Steuerbefehl zu einer definierten Nutzereingabe über die Nutzerschnittstelle (8) abhängig von der erhaltenen Information über das Auswertungsergebnis (22) oder über das Zuordnen eines Steuerbefehls zu einer definierten Nutzereingabe zuzuordnen.

11. System nach einem der Ansprüche 8 bis 10,
**dadurch gekennzeichnet,**
- **dass** die Kommunikationseinheit (6) zur direkten Kommunikation mit mindestens einem weiteren Schweißgerät eingerichtet ist, insbesondere über eine Peer-to-Peer-Verbindung.

12. Verfahren zur Steuerung eines Schweißgeräts (1, 1', 1") eines Systems nach einem der Ansprüche 6 bis 11,
- bei dem Informationen über zur Steuerung des Schweißgeräts (1, 1', 1") verwendeter Steuerbefehle erhalten werden und
- bei dem durch die Steuereinheit nach Erhalt einer Information über eine Nutzereingabe über die Durchführung einer Nutzerschnittstellenoptimierung eine Nutzerschnittstellenoptimierung (52) zur Optimierung einer Nutzerschnittstelle (8) des Schweißgeräts (1,1`,1") durchgeführt wird, umfassend:
- ein Auswerten von erhaltenen Informationen über zur Steuerung des Schweißgeräts (1, 1', 1") verwendeter Steuerbefehle zum Erhalt eines Auswertungsergebnisses (22) und
- ein Zuordnen eines Steuerbefehls zu einer definierten Nutzereingabe über die Nutzerschnittstelle (8) abhängig vom Auswertungsergebnis (22).

13. Verfahren nach Anspruch 12,
**dadurch gekennzeichnet,**
- **dass** Informationen über zur Steuerung eines weiteren Schweißgeräts (1, 1', 1") verwendeter Steuerbefehle erhalten werden und
- **dass** bei der Durchführung der Nutzerschnittstellenoptimierung (52) ein Auswerten von erhaltenen Informationen über zur Steuerung des Schweißgeräts (1, 1', 1") sowie zur Steuerung des weiteren Schweißgeräts (1, 1', 1") verwendeter Steuerbefehle zum Erhalt des Auswertungsergebnisses (22) erfolgt.

## Claims

1. Control unit (2) for a welding device (1, 1', 1"),
- wherein the control unit (2) is configured to receive information about control commands used to control a welding device,
**characterised**
- **in that** the control unit (2) is configured to perform a user interface optimisation (52) for optimising a user interface (8) of a welding device (1, 1', 1") after receiving information about a user input on the performing of a user interface optimisation, the user interface optimisation comprising:
- evaluating received information on control commands used to control a welding device (1, 1', 1") to obtain an evaluation result (22), wherein the information comprises information on control commands relating to the setting of operating parameters, and
- assigning a control command to a defined user input via the user interface (8) as a function of the evaluation result (22), the control command being a selection of an operating parameter, the setting of a welding parameter or a combination selection of operating parameters, and
- assigning a user output to an output element (16a-h) of the user interface (8) assigned to the defined user input.

2. Control unit according to claim 1,
**characterised in that** the control unit (2) is configured to receive information about user inputs at a user interface (8) and to determine control commands assigned to the user inputs.

3. Control unit according to claim 2,
**characterised**
- **in that** the control unit (2) is configured to receive, as information about user inputs at a user interface (8), information about the actuation of input elements (14a-h) of a user interface (8), and
- **in that** the assigning of the user interface optimisation (52) comprises assigning a control command to an actuation of an input element (14a-h) of the user interface (8) as a function of the evaluation result (22).

4. Control unit according to any one of claims 1 to 3,
**characterised in that** the evaluating comprises evaluating a frequentness of control commands used to control a welding device (1, 1', 1").

5. Control unit according to any one of claims 1 to 4,
**characterised in that** the control unit (2) is configured to receive information about a user identity and to perform the user interface optimisation (52) as a function of the user identity.

6. System (3)
- comprising a welding device (1, 1', 1") and
- comprising a control unit (2) assigned to the welding device (1, 1', 1") according to any one of claims 1 to 5, preferably integrated into the welding device (1, 1', 1"),
- wherein the welding device (1, 1', 1") has a user interface (8) and wherein the control unit (2) is configured to perform a user interface optimisation (52) for optimising the user interface (8) of the welding device (1, 1', 1").

7. System according to claim 6,
**characterised in that** the welding device (1, 1', 1") has an identification unit (4) for identifying a user.

8. System according to claim 6 or 7,
**characterised**
- **in that** the welding device (1, 1', 1") has a communication unit (6) for communicating with at least one further welding device (1, 1', 1"),
- **in that** the control unit (2) is configured to receive information received by the communication unit (6) about control commands used to control at least one further welding device (1, 1', 1"), and
- **in that** the user interface optimisation (52) comprises an evaluating of received information about control commands used to control the welding device (1, 1', 1"), to which the control unit (2) is assigned, and of received information about control commands used to control at least one further welding device (1, 1', 1") in order to obtain an evaluation result (22).

9. System according to claim 8,
**characterised in that** the control unit (2) is configured to effect transmission of information about the evaluation result (22) or about the assigning of a control command to a defined user input at the user interface (8) via the communication unit (6).

10. System according to any one of claims 6 to 9,
**characterised**
- **in that** the welding device (1, 1', 1") has a communication unit (6) for communicating with at least one further welding device (1, 1', 1"),
- **in that** the control unit (2) is configured to receive information, received via the communication unit (6), about an evaluation result (22) of a user interface optimisation (52) or about an assigning of a control command to a defined user input, and
- **in that** the control unit (2) is configured to assign a control command to a defined user input via the user interface (8) as a function of the information received about the evaluation result (22) or about the assigning of a control command to a defined user input.

11. System according to any one of claims 8 to 10,
**characterised in that** the communication unit (6) is configured for direct communication with at least one other welding device, in particular via a peer-to-peer connection.

12. Method for controlling a welding device (1, 1', 1") of a system according to any one of claims 6 to 11,
- in which information about control commands used to control the welding device (1, 1', 1") is obtained, and
- in which a user interface optimisation (52) for optimising a user interface (8) of the welding device (1, 1', 1") is performed by the control unit after receiving information about a user input on the performance of a user interface optimisation, the user interface optimisation comprising:
- evaluating received information on control commands used to control the welding device (1, 1', 1") to obtain an evaluation result (22), and
- assigning a control command to a defined user input via the user interface (8) as a function of the evaluation result (22).

13. Method according to claim 12,
**characterised**
- **in that** information about control commands used to control a further welding device (1, 1', 1") is received and
- **in that**, when performing the user interface optimisation (52), information received about control commands used to control the welding device (1, 1', 1") and to control the further welding device (1, 1', 1") is evaluated in order to obtain the evaluation result (22).

## Revendications

1. Unité de commande (2) pour un appareil de soudage (1, 1', 1"),
- dans lequel l'unité de commande (2) est configurée pour obtenir des informations sur des instructions de commande utilisées pour commander un appareil de soudage,
**caractérisé**
- **en ce que** l'unité de commande (2) est configurée pour, après réception d'une information sur une entrée d'utilisateur concernant l'exécution d'une optimisation d'interface utilisateur, exécuter une optimisation d'interface utilisateur (52) pour optimiser une interface utilisateur (8) d'un appareil de soudage (1, 1', 1"), comprenant :
- une évaluation d'informations obtenues sur des instructions de commande utilisées pour commander un appareil de soudage (1, 1', 1") pour obtenir un résultat d'évaluation (22), les informations comprenant des informations sur des instructions de commande concernant le réglage de paramètres de fonctionnement, et
- une affectation d'une instruction de commande à une entrée utilisateur définie via l'interface utilisateur (8) en fonction du résultat d'évaluation (22), l'instruction de commande étant une sélection d'un paramètre de fonctionnement, le réglage d'un paramètre de soudage ou une sélection combinée de paramètres de fonctionnement, et
- une affectation d'une sortie utilisateur à un élément de sortie (16a-h) de l'interface utilisateur (8) affecté à l'entrée utilisateur définie.

2. Unité de commande selon la revendication 1,
**caractérisée en ce que** l'unité de commande (2) est configurée pour recevoir des informations sur des entrées d'utilisateur sur une interface utilisateur (8) et pour déterminer des instructions de commande affectés aux entrées d'utilisateur.

3. Unité de commande selon la revendication 2,
**caractérisée**
- **en ce que** l'unité de commande (2) est configurée pour obtenir, en tant qu'informations sur des entrées d'utilisateur sur une interface utilisateur (8), des informations sur l'actionnement d'éléments d'entrée (14a-h) d'une interface utilisateur (8), et
- **en ce que** l'affectation de l'optimisation de l'interface utilisateur (52) comprend une affectation d'une instruction de commande à un actionnement d'un élément d'entrée (14a-h) de l'interface utilisateur (8) en fonction du résultat d'évaluation (22).

4. Unité de commande selon l'une des revendications 1 à 3,
**caractérisée en ce que** l'évaluation comprend une évaluation d'une fréquence d'instructions de commande utilisées pour commander un appareil de soudage (1, 1' 1").

5. Unité de commande selon l'une des revendications 1 à 4,
**caractérisée en ce que** l'unité de commande (2) est configurée pour recevoir une information sur une identité d'utilisateur et pour effectuer l'optimisation d'interface utilisateur (52) en fonction de l'identité d'utilisateur.

6. Système (3)
- avec un appareil de soudage (1, 1', 1") et
- avec une unité de commande (2) affecté à l'appareil de soudage (1, 1', 1") selon l'une des revendications 1 à 5, de préférence intégrée dans l'appareil de soudage (1, 1', 1"),
- l'appareil de soudage (1, 1', 1") présentant une interface utilisateur (8) et l'unité de commande (2) étant configurée pour effectuer une optimisation de l'interface utilisateur (52) pour optimiser l'interface utilisateur (8) de l'appareil de soudage (1, 1', 1").

7. Système selon la revendication 6, **caractérisé en ce que** l'appareil de soudage (1, 1', 1") présente une unité d'identification (4) pour l'identification d'un utilisateur.

8. Système selon la revendication 6 ou 7,
**caractérisé**
- **en ce que** l'appareil de soudage (1, 1', 1") présente une unité de communication (6) pour la communication avec au moins un autre appareil de soudage (1, 1', 1"),
- **en ce que** l'unité de commande (2) est configurée pour recevoir des informations reçues par l'unité de communication (6) concernant des instructions de commande utilisées pour commander au moins un autre appareil de soudage (1, 1', 1"), et
- **en ce que** l'optimisation de l'interface utilisateur (52) comprend une évaluation d'informations obtenues sur des instructions de commande utilisées pour la commande de l'appareil de soudage (1, 1', 1") auquel l'unité de commande (2) est affecté, ainsi que d'informations obtenues sur des instructions de commande utilisées pour la commande d'au moins un autre appareil de soudage (1, 1', 1") pour obtenir un résultat d'évaluation (22).

9. Système selon la revendication 8,
**caractérisé en ce que** l'unité de commande (2) est configurée pour entraîner un envoi d'une information sur le résultat d'évaluation (22) ou sur l'affectation d'une instruction de commande à une entrée utilisateur définie sur l'interface utilisateur (8) par l'intermédiaire de l'unité de communication (6).

10. Système selon l'une quelconque des revendications 6 à 9,
**caractérisé**
- **en ce que** l'appareil de soudage (1, 1', 1") présente une unité de communication (6) pour la communication avec au moins un autre appareil de soudage (1, 1', 1"),
- **en ce que** l'unité de commande (2) est configurée pour recevoir une information, reçue par l'intermédiaire de l'unité de communication (6), concernant un résultat d'évaluation (22) d'une optimisation d'interface utilisateur (52) ou concernant une affectation d'une instruction de commande à une entrée utilisateur définie, et
- **en ce que** l'unité de commande (2) est configurée pour affecter une instruction de commande à une entrée d'utilisateur définie par l'intermédiaire de l'interface utilisateur (8) en fonction de l'information obtenue sur le résultat d'évaluation (22) ou sur l'affectation d'une instruction de commande à une entrée d'utilisateur définie.

11. Système selon l'une quelconque des revendications 8 à 10,
**caractérisé en ce que** l'unité de communication (6) est configurée pour communiquer directement avec au moins un autre appareil de soudage, notamment par l'intermédiaire d'une liaison poste à poste.

12. Procédé de commande d'un appareil de soudage (1, 1', 1") d'un système selon l'une quelconque des revendications 6 à 11,
- dans lequel on obtient des informations sur des instructions de commande utilisées pour commander l'appareil de soudage (1, 1', 1") et
- dans lequel, après réception d'une information sur une entrée d'utilisateur concernant l'exécution d'une optimisation d'interface utilisateur, une optimisation d'interface d'utilisateur (52) est exécutée pour optimiser une interface d'utilisateur (8) de l'appareil de soudage (1, 1', 1"), comprenant:
- une évaluation d'informations obtenues sur des instructions de commande utilisées pour commander l'appareil de soudage (1, 1', 1") pour obtenir un résultat d'évaluation (22) et
- une affectation d'une instruction de commande à une entrée utilisateur définie via l'interface utilisateur (8) en fonction du résultat d'évaluation (22).

13. Procédé selon la revendication 12,
**caractérisé**
- **en ce que** des informations sur des instructions de commande utilisées pour commander un autre appareil de soudage (1, 1', 1") sont obtenues et
- **en ce que**, lors de l'exécution de l'optimisation de l'interface utilisateur (52), une évaluation d'informations obtenues sur des instructions de commande utilisées pour la commande de l'appareil de soudage (1, 1', 1") ainsi que pour la commande de l'autre appareil de soudage (1, 1', 1") est effectuée pour obtenir le résultat d'évaluation (22).
